# EUROPEAN PATENT APPLICATION

(11) **EP 4 668 385 A1**
(43) Date of publication of application: **24.12.2025**
(21) Application number: 24863056.8
(22) Date of filing: 12.08.2024
(51) Int. Cl.: H01M 10/04, H01M 50/627, H01M 50/105

(54) **APPARATUS FOR MANUFACTURING POUCH-TYPE SECONDARY BATTERY**

(30) Priority: 05.09.2023 KR 20230117452
(71) Applicant: LG Energy Solution, Ltd., Seoul 07335 (KR)
(72) Inventor: JANG, Chang Woo, Daejeon 34122 (KR)
(74) Representative: Goddar, Heinz J.
(86) International application number: PCT/KR2024/011979
(87) International publication number: WO 2025/053474

(57) **Abstract**

The present invention relates to a pouch-type secondary battery manufacturing device, and more specifically, relates to an adsorption device holding a pouch in an electrolyte injection process, and a pouch-type secondary battery manufacturing device comprising the same. According to one example of the present invention, a pouch-type secondary battery manufacturing device may be provided, which comprises: a base; a pad assembly provided at the front of the base and having an adsorption pad adsorbing a pouch in a horizontal direction to form an electrolyte injection path into the inside of the pouch; and a pad cover covering the upper part and front of the pad assembly and having a nozzle spraying air toward the adsorption pad.

## Description

### Technical Field

The present invention relates to a pouch-type secondary battery manufacturing device, and more specifically, relates to an adsorption device holding a pouch in an electrolyte injection process, and a pouch-type secondary battery manufacturing device comprising the same.

This application claims the benefit of priority based on Korean Patent Application No. 10-2023-0117452 dated September 5, 2023, the disclosure of which is incorporated herein by reference in its entirety.

### Background Art

Generally, as the supply of portable small electrical and electronic devices is spread, development of new type secondary batteries such as nickel-metal hydride batteries and lithium secondary batteries is actively underway. Recently, lithium secondary batteries are widely used not only for power tools but also for automobiles.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially stacked, in an exterior material such as a pouch or a cylindrical can. Thereafter, a process of injecting the electrolyte into the battery assembly using an electrolyte injection device is performed.

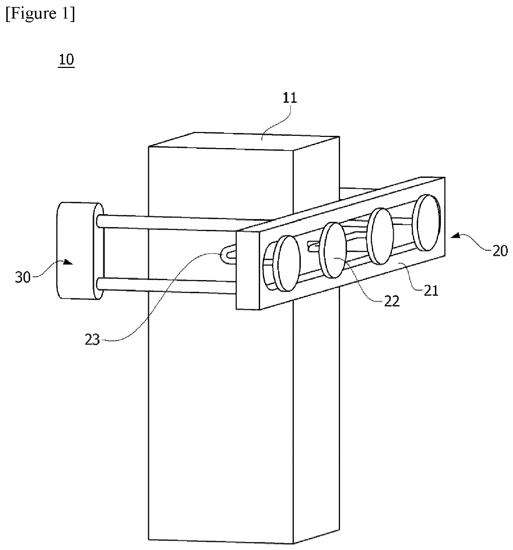

Figure 1 illustrates one example of a conventional adsorption device 10 holding a pouch in an electrolyte injection process.

A pad assembly (20) is provided long left and right with respect to a base (11), and the pad assembly (20) is provided to be movable back and forth with respect to the base (11).

The pad assembly (20) comprises a frame (21) and a plurality of adsorption pads (22) provided in the frame (21). A vacuum pipe (23) is connected to the adsorption pads (22), so that the adsorption pads (22) adsorb the pouch by vacuum.

The pad assembly (20), especially the frame (21), may be connected to a linear movement device (30), thereby being provided to move linearly back and forth.

The adsorption device may be referred to as a device provided on both sides based on a pouch to secure a path for an electrolyte to be injected by holding the pouch upon the electrolyte injection process. That is, it may be referred to as a device fixing the pouch in a state where an opening portion is expanded by adsorbing the upper part of the pouch.

The electrolyte injection is generally performed through a cylindrical tube. As the electrolyte injection tube is formed into a simple cylindrical tube, the remaining electrolyte inside the electrolyte injection tube may leak out of the tube when the electrolyte injection tube moves and waits during the electrolyte injection process. In addition, a small amount of electrolyte may fly out during the injection process to contaminate the outside. The leaked electrolyte may be spread or transferred to the adsorption device, thereby causing contamination and corrosion of the device and equipment.

Particularly, foreign substances are attached to the adsorption pad adsorbing the pouch through vacuum, whereby the performance of the adsorption pad is deteriorated, so that there may be a problem that errors occur in the vacuum adsorption. In addition, foreign substances attached to the adsorption pad are transferred to the pouch during the pouch adsorption process, whereby electrolyte foreign substances remain on the surface of the pouch, so that they may also cause pouch defects.

As shown in Figure 1, it can be known that the conventional adsorption device, especially the adsorption pad, is not protected from such external contamination and is exposed as it is. In other words, it can be regarded that the conventional adsorption device clearly shows problems due to electrolyte foreign substances. Therefore, it is necessary to devise a method that can effectively prevent problems due to electrolyte foreign substances in the adsorption device.

### Disclosure

### Technical Problem

The present invention is intended to solve problems of conventional manufacturing devices.

Through one example of the present invention, it is intended to provide a manufacturing device and a manufacturing method, which can effectively prevent electrolyte foreign substances generated in an electrolyte injection process from being transferred to an adsorption device or an adsorption pad.

Through one example of the present invention, it is intended to provide a manufacturing device and a manufacturing method capable of effectively removing electrolyte foreign substances attached to an adsorption pad.

Through one example of the present invention, it is intended to provide a manufacturing device and a manufacturing method, which can effectively prevent electrolyte foreign substances removed upon removal of electrolyte foreign substances from spreading to the surroundings.

Through one example of the present invention, it is intended to provide a manufacturing device and a manufacturing method, which can prevent an increase in the time required for a manufacturing process by removing electrolyte contaminants using idle periods of basic operations in an adsorption device or removing electrolyte contamination only under certain conditions.

### Technical Solution

In order to achieve the above-described objects, according to one example of the present invention, a pouch-type secondary battery manufacturing device may be provided, which comprises: a base; a pad assembly provided at the front of the base and having an adsorption pad adsorbing a pouch in a horizontal direction to form an electrolyte injection path into the inside of the pouch; and a pad cover covering the upper part and front of the pad assembly and having a nozzle spraying air toward the adsorption pad.

The pouch-type secondary battery manufacturing device may be a part of an electrolyte injection device, which may also be referred to as a pouch adsorption fixing device.

It is preferable that the pouch-type secondary battery manufacturing device further comprises a moving device moving the pad assembly forward and backward with respect to the base.

When the pouch is introduced into an electrolyte injection device, the pad assembly moves forward to adsorb and fix the pouch. The pad assemblies may be provided symmetrically on both sides of the electrolyte injection device. As the pad assemblies on both sides approach the pouch to adsorb the pouch, the opening of the pouch may be opened to be expanded. The electrolyte may be easily injected in the expanded opening state.

Thereafter, it is preferable that when the electrolyte injection is completed, the pad assembly releases the adsorption and moves backward. That is, it is preferable that the pad assembly is provided so that it moves forward for electrolyte injection and returns backward after the electrolyte injection is completed.

Therefore, the pad assembly may repeat the forward movement and adsorption, and the adsorption release and backward movement, thereby enabling so that the electrolyte injection process is continuously and repeatedly performed.

It is preferable that the nozzle is provided to spray air in a downward diagonal shape from the front upper part of the adsorption pad.

It is preferable that the base is provided with a tray accommodating electrolyte foreign substances separated from the adsorption pad to fall off by the air spray of the nozzle. It is preferable that the tray is provided to be detachable from the base, or provided to be capable of seating and separation.

It is preferable that a blocking plate or a blocking wall extending forward to block electrolyte foreign substances separated from the adsorption pad from spreading to the surroundings is provided on the left and right sides of the base. The blocking plate may also perform a function of blocking electrolyte foreign substances scattered around the pouch-type secondary battery manufacturing device from approaching the pad assembly.

It is preferable that upon the air spray of the nozzle, the spreading of the electrolyte foreign substances in the pad assembly is blocked in the up-and-down, right-and-left, and front-and-back directions through the base, pad cover, tray, and blocking plate. The blocking plate may also prevent the electrolyte foreign substances from spreading or inflow from the rear left and right sides of the pad assembly.

It is preferable that the pad cover is provided to be movable between an exposure position exposing a front of the pad assembly and a cover position covering the front of the pad assembly.

It is preferable that the adsorption of the pouch is performed through the pad assembly at the exposure position of the pad cover, and the air spray is performed through the nozzle at the cover position of the pad cover.

It is preferable that the pad cover is provided to be movable up and down between the exposure position and the cover position with respect to the base. The pad cover may be lifted to move to the exposure position, and lowered to move to the cover position. Of course, the pad cover may also be provided to be capable of swinging between the exposure position and the cover position.

It is preferable that the base is provided with a guide tower guiding elevation of the pad cover.

The pad cover may be provided to slide on the guide tower.

The pad cover may comprise an upper cover extending in a diagonal shape from top to bottom to cover an upper part of the pad assembly; and a front cover extending from the upper cover to the lower part to cover the front of the pad assembly.

It is preferable that a plurality of the adsorption pads is provided along the width direction of the pad assembly, and the width of the pad cover is larger than the width of the pad assembly.

It is preferable that the pad cover comprises a pneumatic pipe fixed by extending along the upper cover and the front cover, and the nozzle is connected to a terminal of the pneumatic pipe and positioned on the upper part of the front cover.

It is preferable that the pouch-type secondary battery manufacturing device further comprises an electrolyte injection tube injecting an electrolyte into the pouch, wherein the base, pad assembly, and pad cover are each provided on both sides centered on the electrolyte injection tube. That is, the pouch-type secondary battery manufacturing device may comprise an electrolyte injection device through an electrolyte injection tube, and a pouch adsorption device symmetrically provided on both sides of the electrolyte injection device.

In order to achieve the above-described objects, according to one example of the present invention, a pouch-type secondary battery manufacturing device may be provided, which comprises: a base sunken from the front upper part backward and downward to form a recess having a front surface and a lower surface thereon; a pad assembly provided at the front of the front surface of the recess and having an adsorption pad adsorbing a pouch in a horizontal direction to form an electrolyte injection path into the inside of the pouch; and a pad cover covering the upper part and front of the pad assembly located in the recess and having a nozzle spraying air toward the adsorption pad.

It is preferable that a blocking plate extending laterally and forward and provided to surround the pad assembly is included on the left and right sides of the recess. It is preferable that the blocking plate is provided on both sides of the recess, respectively.

It is preferable that a tray accommodating electrolyte foreign substances separated from the adsorption pad is provided on the lower surface of the recess.

It is preferable that upon air spray of the nozzle, the pad assembly is surrounded in the up-and-down, right-and-left, and front-and-back directions through the front surface of the recess, the pad cover, the tray, and the blocking plate.

In order to achieve the above-described objects, according to one example of the present invention, a pouch-type secondary battery manufacturing device may be provided, which comprises: a base; a pad assembly provided at the front of the base and having an adsorption pad adsorbing a pouch in a horizontal direction to form an electrolyte injection path into the inside of the pouch; and a pad cover provided to be movable between an exposure position exposing a front of the pad assembly and a cover position covering the front of the pad assembly.

In the exposure position state of the pad cover, the pad assembly may move forward to adsorb the pouch, and then move backward to return to its original position. That is, the pad cover may be excluded on the movement path of the pad assembly.

Before the pad assembly moves forward, the pad cover moves to the cover position to cover the front of the pad assembly. Particularly, it is possible to cover not only the front but also the upside of the pad assembly. That is, when the pad assembly is surrounded by a certain space, the pad assembly may be cleaned using compressed air within the certain space. At this time, contaminants may be prevented from flowing into the certain space or, conversely, from being discharged outside the certain space.

In order to achieve the above-described objects, according to one example of the present invention, a secondary battery manufacturing method may be provided, which comprises: a step of adsorbing a pouch through a pad assembly in an exposure position state of a pad cover and an adsorption position of the pad assembly to inject an electrolyte into the pouch; and a cleaning step of spraying compressed air into the pad assembly through a nozzle in a cover position state of the pad cover and a return position of the pad assembly to clean the pad assembly.

The pad cover may be moved up and down or rotated between the exposure position and the cover position. The exposure position is a position where the pad cover does not interfere with the movement of the pad assembly, and the cover position is a position where the pad cover interferes with the movement of the pad assembly. That is, the cover position of the pad cover may be referred to as a position where the pad cover interferes with the movement of the pad assembly between the adsorption position and the return position of the pad assembly. Therefore, the pad cover may be in the cover position state when the pad assembly does not move.

The cover position of the pad cover may be a state where the pad cover is positioned in the front of the pad assembly. Therefore, when the nozzle is provided on the pad cover, the injection direction may be in the front of the pad assembly. Particularly, by spraying compressed air from the front upper part of the pad assembly, it is possible to effectively clean the pad assembly.

The step of injecting an electrolyte may be performed repeatedly, and the cleaning step may be performed one-to-one with the electrolyte injection step. In addition, if the step of injecting an electrolyte is performed by a set number of times, or a preset condition, such as the lapse of a certain time, is satisfied, the cleaning step may be performed. The implementation of the cleaning step may be automatically controlled.

In the above-described examples, it is preferable that the position of the pad cover may be interlocked with the movement of the pad assembly, or may be controlled independently. As one example, when the number of electrolyte injections reaches a certain number of times, the pad cover may be moved to the cover position, or in a state where the electrolyte injection is stopped for a predetermined time or more, the pad cover may be moved to the cover position.

Similarly, it is preferable that the cleaning of the pad assembly through the nozzle may be interlocked with the movement of the pad assembly, or may be controlled independently. As one example, when the number of electrolyte injections reaches a certain number of times, the cleaning of the pad assembly may be performed through the nozzle. In addition, in a state where the pad cover is moved to the cover position, the cleaning of the pad assembly may be performed through the nozzle for a predetermined time.

### Advantageous Effects

Through one example of the present invention, it is possible to provide a manufacturing device and a manufacturing method, which can effectively prevent electrolyte foreign substances generated in an electrolyte injection process from being transferred to an adsorption device or an adsorption pad.

Through one example of the present invention, it is possible to provide a manufacturing device and a manufacturing method capable of effectively removing electrolyte foreign substances attached to an adsorption pad.

Through one example of the present invention, it is possible to provide a manufacturing device and a manufacturing method, which can effectively prevent electrolyte foreign substances removed upon removal of electrolyte foreign substances from spreading to the surroundings.

Through one example of the present invention, it is possible to provide a manufacturing device and a manufacturing method, which can prevent an increase in the time required for a manufacturing process by removing electrolyte contaminants using idle periods of basic operations in an adsorption device or removing electrolyte contamination only under certain conditions.

Through one example of the present invention, it is possible to provide a manufacturing device and a manufacturing method, which can be controlled so that setting and fixing of an injection position facilitate, and automatic cleaning is performed, by mounting an injection nozzle on a pad cover.

### Description of Drawings

Figure 1 illustrates one example of a conventional pouch adsorption device,
Figure 2 illustrates one example of a pouch-type secondary battery manufacturing device according to one example of the present invention,
Figure 3 illustrates an appearance in which air is sprayed onto an adsorption pad after electrolyte injection is completed,
Figure 4 illustrates an appearance in which an adsorption pad is advanced for electrolyte injection, and a pad cover is moved to an exposure position,
Figure 5 illustrates an appearance in which an electrolyte is injected into a pouch through a manufacturing device,
Figure 6 illustrates a state in which an adsorption pad is returned after electrolyte injection is completed, and the adsorption pad and its surroundings are contaminated with electrolyte foreign substances,
Figure 7 illustrates an appearance in which air is sprayed onto an adsorption pad contaminated with electrolyte foreign substances, and
Figure 8 illustrates an appearance in which electrolyte foreign substances separated from an adsorption pad are accommodated in a tray.

### Best Mode

Hereinafter, an adsorption device according to one example of the present invention will be described in detail with reference to the attached drawings.

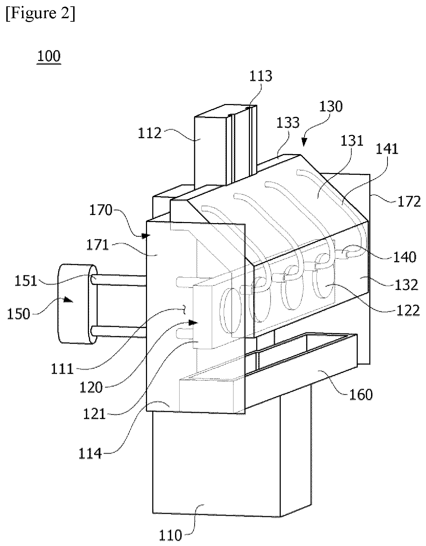

Figure 2 illustrates an external appearance of an adsorption device according to one example of the present invention, wherein the adsorption device may be regarded as a device that adsorbs and fixes a pouch in a process of injecting an electrolyte into the pouch.

The adsorption device (100) may be configured by comprising a base (110) forming a reference. The base (110) is provided in a fixed frame shape, wherein various constitutions may be provided to be fixed or movable based on the base (110).

The base (110) may be formed in a box shape, and unlike the conventional base (11) shown in Figure 1, according to the present example, it is preferable that a recess (111) is formed in the base (110). The recess (111) may be formed in a shape that it is sunken from the front upper part of the base (110) backward and downward. Due to the recess, the cross section of the base (110) may have an "L" shape. Therefore, the recess (111) may have a lower surface (114) and a front surface (115).

The recess (111) may form a space surrounding the pad assembly (120), as described below. That is, the pad assembly (120) may be surrounded by the recess structure of the base (110) together with the pad cover (130) and the blocking plate (170).

The pad assembly (120) may have the same shape and structure as in the conventional adsorption device. As one example, the pad assembly (120) may comprise a frame (121) and a plurality of adsorption pads (122) provided on the frame (121). The number of the adsorption pads (122) may vary depending on the length or width of the pouch to be adsorbed. A vacuum pipe may be connected to each of the adsorption pads, and the pouch may be adsorbed through vacuum.

The pad assembly (120) may be provided to integrally move back and forth through the frame (121). By driving the moving device (150), the pad assembly (120) may move forward, thereby adsorbing the pouch near the pouch. When this adsorption is performed, the opening of the pouch may open, and then the electrolyte may be injected.

When the injection of the electrolyte is completed, the pad assembly (120) may move backward by driving the moving device (150). That is, it may move to the original position. The frame (121) of the pad assembly (120) may be connected to a plurality of shafts (151). The moving device may be a linear moving device. The linear drive force is transmitted through the shaft (151), whereby the pad assembly (120) may integrally move back and forth.

The conventional pad assembly (120) is always exposed to the outside. Particularly, it can be regarded that the forward-facing adsorption pad in the pad assembly (120) is very vulnerable to electrolyte foreign substances flowing in from various directions. This can be said to be the same not only upon electrolyte injection but also in the returned state after injection completion.

According to the present example, it is preferable to comprise a pad cover (130) capable of covering not only the adsorption pad but also the pad assembly (120).

The pad cover (130) may be provided to basically cover the front of the adsorption pad. That is, to prevent foreign substances flowing in from the front of the adsorption pad from reaching the adsorption pad, the pad cover (130) may be provided. That is, it may perform a blocking plate or shield function that blocks the movement path of foreign substances from the front.

The pad cover (130) may be provided to cover the upper part of the adsorption pad. That is, to prevent foreign substances flowing in from the upper part of the adsorption pad from reaching the adsorption pad, the pad cover (130) may be provided. That is, it may perform a blocking plate or shield function that blocks the movement path of foreign substances from the upper part.

Therefore, according to the present example, it is basically possible to prevent foreign substances from flowing into the pad assembly by the pad cover (130) after the electrolyte injection is completed.

Here, it can be known that the pad cover (130) can perform a function of surrounding not only the adsorption pad but also the pad assembly and surrounding components together. To this end, it is preferable that the left-right width of the pad cover (130) is larger than the left-right width of the pad assembly.

Specifically, the pad cover (130) may be formed by comprising an upper cover (131) extended to cover the upper part of the pad assembly and a front cover (132) extended from the upper cover to the lower part to cover the front of the pad assembly.

The upper cover (131) and the front cover (132) may be formed integrally. Therefore, the upper part and the front of the pad assembly are blocked through the pad cover (130), so that the pad assembly may be isolated or blocked from the surroundings.

The upper cover (131) may be formed by extending in a diagonal shape from top to bottom, and then the front cover (132) may be extended downward. Preferably, the front cover may be extended vertically downward. Here, the angle between the upper cover (131) and the front cover (132) may be an obtuse angle, but may also be a right angle or an acute angle. However, as illustrated, it is preferable that the upper cover (131) and the front cover (132) form an obtuse angle with each other. The reason is because, as described below, the pad cover (130) is provided with a pneumatic pipe, and thus abrupt bending of the pneumatic pipe can be prevented through a gentle connection between the two.

The pad cover (130) may comprise a pad base (133). The pad base may be connected to the upper cover (131). In addition, the pad base (133) may also be formed integrally with the upper cover.

It is preferable that the pad cover (130) has a movable constitution. That is, this is because after the injection of the electrolyte is completed, it is provided to surround the pad assembly (120), and to inject the electrolyte, it should not prevent the pad assembly (120) from adsorbing the pouch. That is, the pad cover (130) must move for injecting the electrolyte. Therefore, it is preferable that the pad cover (130) is provided to be movable between the cover position and the exposure position.

The pad base (133) may be referred to as forming the movement center of the pad cover (130).

As one example, the pad base (133) may be provided to be movable up and down. When the pad base (133) rises, the entire pad cover (130) may rise. That is, when the pad cover (130) rises, the front of the pad assembly (120) may be completely exposed. In other words, the constitution that interferes with or blocks the movement of the pad assembly (120) in the front may be excluded.

Therefore, the position where the pad assembly (120) is completely raised may be called the exposure position. Then, the position where the pad assembly (120) is completely lowered may be called the cover position. In the cover position, as shown in Figure 2, the pad cover (130) may completely block the front and upper part of the pad assembly (120).

The elevation of the pad cover (130) may be performed through a guide tower (112). The guide tower (112) may be provided on the base (110), and particularly, may be provided on the above-described recess (111). The guide tower (112) may be provided integrally with the base. The guide tower (112) may be provided by extending vertically.

The pad cover (130), particularly, the pad base (133), may be provided to be movable on the guide tower (112) up and down. That is, it may move up and down through sliding. To this end, the guide tower (112) may be provided with a sliding rail (113) up and down. Here, the pad cover (130) needs to perform not only the cover function but also an air spray function, as described below. Therefore, considering the weight of the pad cover (130), it is preferable that there are at least two or more of the rails. Through this, the pad cover (130) may stably move up and down. Furthermore, the pad base (133) may be provided with a linear drive part so that it is linearly movable through the sliding rail.

Meanwhile, the pad cover (130) may be moved between the exposure position and the cover position through rotation as well as elevation. As one example, the pad base (133) may be rotated with respect to the guide tower or base (110). If the pad cover (130) illustrated in Figure 2 is in the cover position, the pad cover (130) may be rotated counterclockwise with respect to the pad base (133). By this rotation, the pad cover (130) may be removed from the front of the pad assembly (120). That is, the pad cover (130) may be moved to the exposure position.

Therefore, the mechanism that allows the pad cover (130) to move between the cover position and the exposure position may be implemented in various ways.

According to the present example, it is actively possible to remove electrolyte foreign substances from the pad assembly (120), as well as it is passively possible to prevent electrolyte foreign substances from flowing into the pad assembly (120).

Specifically, according to the present example, a nozzle (140) spraying air toward the adsorption pad (122) may be provided. When there are multiple adsorption pads, the nozzle (140) is provided for each adsorption pad, so that there are preferably multiple nozzles.

The nozzle (140) may be connected to a pneumatic pipe (141), and the pneumatic pipe (141) may be provided by extending from the base (110) or the guide tower (112).

It is preferable that the nozzle (140) is provided on the pad cover (130). That is, the nozzle (140) is provided on the inner surface of the pad cover (130) opposite to the adsorption pad (122), thereby spraying compressed air, so that foreign substances attached to the adsorption pad (122) can be forcibly removed.

The pneumatic pipe (141) may extend along the pad cover (130), and particularly, may extend along the upper cover (131) and the front cover (132). Of course, the pneumatic pipe (141) may be fixed along the inner surface of the pad cover (130), and it may also be possible to be buried inside the pad cover (130).

As described above, since the pad cover (130) has a constitution that it moves between the cover position and the exposure position, the pneumatic pipe (141) is preferably a pipe made of a flexible material.

It can be said that the electrolyte foreign substances attached to the pad cover (130) have a crystal size larger than that of the scattered electrolyte foreign substances. Therefore, there is also a concern that foreign substances separated from the adsorption pad by the injected air are transferred to surrounding components. To solve this problem, according to the present example, it is preferable that the nozzle is provided to inject air in a diagonal shape from the up to the down. That is, it is preferable that the nozzle is provided to inject air in a diagonal direction from the front upper part of the adsorption pad.

The foreign substances may be separated downward through the air spray, and according to the present example, a tray (160) for accommodating the separated foreign substances may be provided.

It is preferable that the tray (160) is located at the lower part of the pad assembly (120). Particularly, it is preferable that the left-right width of the tray (160) is larger than the left-right width of the pad assembly, and the front-back width of the tray (160) is also larger than the front-back width of the pad assembly. The reason is for sufficiently accommodating the separated foreign substances in a wide region.

The tray (160) may be placed on a tray support surface (114). The tray support surface (114) may be formed as a horizontal plane, and may stably support the tray (160).

As described above, it is preferable that a recess (111) is formed in the base (110). The tray support surface (114) may be formed by such a recess (111). A user can mount or remove the tray (160) through the front. Therefore, contaminants are concentrated into the tray (160), so that it may facilitate to remove them.

Meanwhile, upon air spray through the nozzle (140), foreign substances may not only be separated downward but also may be separated in the left-right direction. In this case, foreign substances may spread around the adsorption device (100) to cause contamination of the surroundings.

Therefore, according to the present example, blocking plates (171, 172) may be provided on the left and right sides of the adsorption device (100). The left blocking plate (171) and the right blocking plate (172) may be provided symmetrically to each other. For convenience, the left and right sides have been designated based on the state where the adsorption pad (122) is viewed from the front.

As shown in Figure 2, the left-right width of the pad assembly (120) is larger than the left- right width of the base (110). Therefore, when only the left and right parts of the pad assembly (120) are blocked with the blocking plates, both rear sides of the pad assembly (120) are opened. Therefore, the blocking plates (171, 172) may be provided to block not only the left and right sides of the pad assembly (120) but also the rear left and right sides.

The blocking plates (171, 172) may be a constitution fixed to the base (110). Therefore, it is always possible to block foreign substances from flowing in from the left and right sides and the rear left and right sides of the pad assembly (120). On the contrary, this means that it is possible to block foreign substances from scattering from the outside to the left and right sides and the rear left and right sides of the pad assembly (120). Most of the scattering-blocked foreign substances may flow into the tray (160) to be accommodated therein.

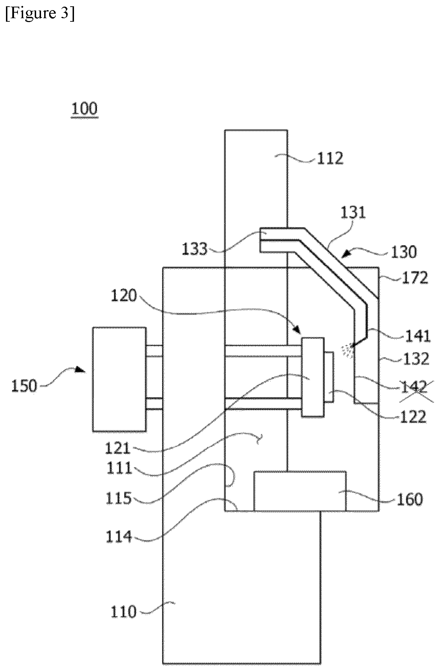

Hereinafter, with reference to Figures 3 to 8, the driving appearance of the adsorption device according to one example of the present invention and the electrolyte injection process will be described in detail. For the convenience of explanation, it has been illustrated while omitting the left blocking plate.

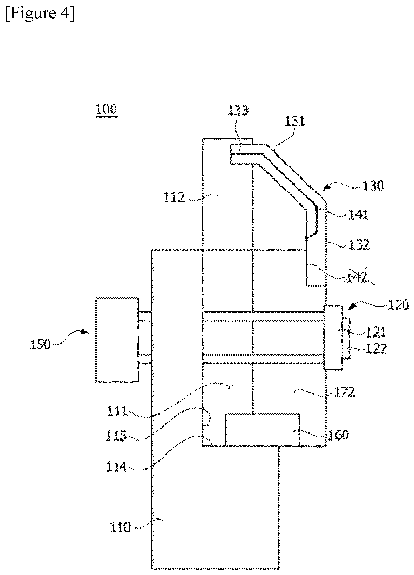

Figure 3 illustrates an appearance before drive of an adsorption pad, and Figure 4 illustrates an appearance after drive of an adsorption pad.

As illustrated in Figure 3, before drive of the adsorption pad, the pad assembly (120) is positioned in the original position, and the pad cover (130) is also positioned in the original position or the cover position. Here, the before drive of the adsorption pad refers to a state before vacuum adsorption is performed from the adsorption pad (122), which may, therefore, be regarded as a state before adsorbing the pouch for electrolyte injection. This state may be called the initial state.

In the initial state (step), the pad assembly (120) is surrounded by the pad cover (130) on the upper part and front, the blocking plates (171, 172) on the left and right sides, and the rear left and right sides, and the base (110) at the rear. Also, the tray (160) is positioned at the lower part of the pad assembly (120). In this instance, air is sprayed toward the adsorption pad (122) through the nozzle. The foreign substances attached to the adsorption pad (122) are separated by the sprayed air, and the separated foreign substances move downward to be accommodated in the tray (160). Then, since the pad assembly (120) is surrounded by various constitutions, it can effectively prevent the separated foreign substances from scattering around the adsorption device. This air spray may be performed for a preset time, and when the air spray is finished, it may move to the next step.

As shown in Figure 4, the pad assembly (120) moves forward for drive of the adsorption pad. That is, when the initial state (step) is finished, the pad assembly (120) moves to the operating position. Such a forward movement of the pad assembly (120) may be performed through the moving device (150). When the forward movement of the pad assembly (120) is finished or in the forward movement process, a vacuum may be applied to the adsorption pad. That is, the vacuum for pouch adsorption may be applied.

At this time, there is a concern that the pad cover (130) may interfere with the forward movement of the pad assembly (120). Therefore, the pad cover (130) must move from the cover position to the exposure position. As one example, the pad cover (130) may rise to move to the exposure position. Since the pad cover (130) is located at the front of the pad assembly (120), the movements of the pad cover (130) and the pad assembly (120) may start at the same time, and the pad assembly (120) may move as the pad cover (130) moves first. In any case, interference between the moving pad assembly (120) and pad cover (130) will be excluded.

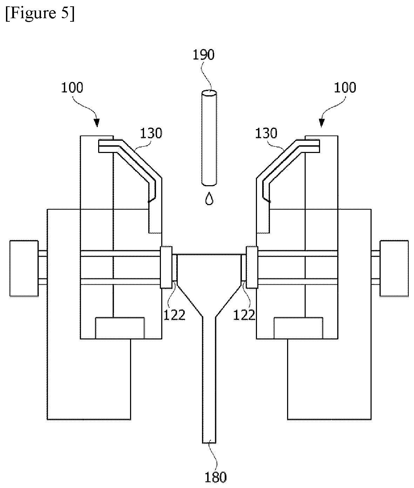

Figure 5 illustrates an appearance in which electrolyte injection is performed in a state where the forward movement of the pad assembly (120) is completed to adsorb the pouch.

As illustrated, the adsorption devices (100) may be provided on both sides, respectively, based on the pouch (180). That is, the adsorption devices may be provided symmetrically on both sides to perform the same drive. The appearance of the adsorption device at this time may be the same as illustrated in Figure 4. The left adsorption device may adsorb one side of the pouch, and the right adsorption device may adsorb the other side of the pouch. Particularly, it may adsorb the upper part of the pouch to form a path for injecting the electrolyte into the pouch.

When the adsorption of the pouch is completed, the electrolyte may be introduced into the pouch (180) through the electrolyte injection tube (190). That is, after the adsorption of the pouch is successfully completed, the electrolyte may be supplied through the electrolyte injection tube. Therefore, the injection and stop of the electrolyte through the electrolyte injection tube (190) are repeated. For this reason, some of the electrolyte may be transferred to the surrounding components. Particularly, electrolyte foreign substances may be attached to the adsorption pad (122). In addition, the liquid electrolyte is injected by a gravity drop method, so that the electrolyte may be scattered.

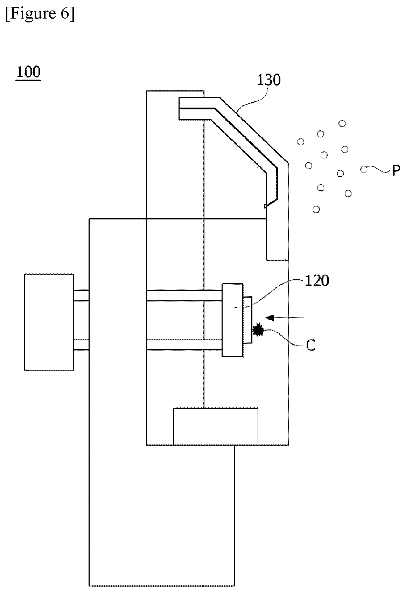

Figure 6 illustrates the electrolyte scattered around the adsorption device and the electrolyte foreign substances attached to the adsorption pad after the electrolyte injection process is completed.

When the electrolyte injection process is completed, the pad assembly (120) returns to the original position, where the adsorption pad may be in a state where it is contaminated with the electrolyte foreign substances. Crystallized electrolyte (C) with relatively large particles may be attached to the adsorption pad. Then, the scattered electrolyte (P) may be positioned in the air above the front of the adsorption device (100). Here, as illustrated in Figure 6, the state where the pad assembly (120) has completed its original position may also be referred to as the completion of the electrolyte injection process.

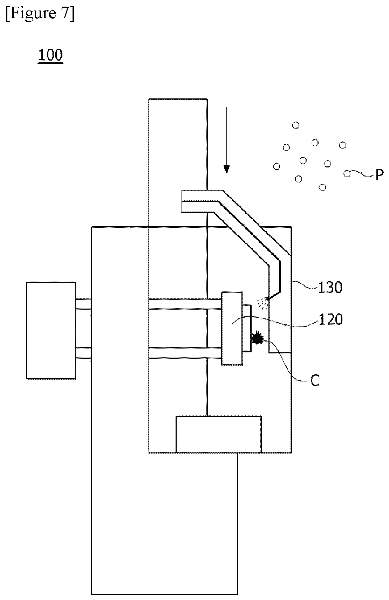

As illustrated in Figure 7, when the return of the pad assembly (120) is completed, the pad cover (130) moves to the cover position. As one example, the pad cover (130) is lowered. By the relative position and the shape of the pad cover (130), it is possible to effectively prevent the scattered electrolyte (P) from flowing into the pad assembly (120).

As the pad cover (130) moves to the cover position or when the movement is completed, air is sprayed toward the adsorption pad (122) through the nozzle. That is, air may be sprayed toward the adsorption pad in a state where the adsorption pad (122) is substantially surrounded by other components.

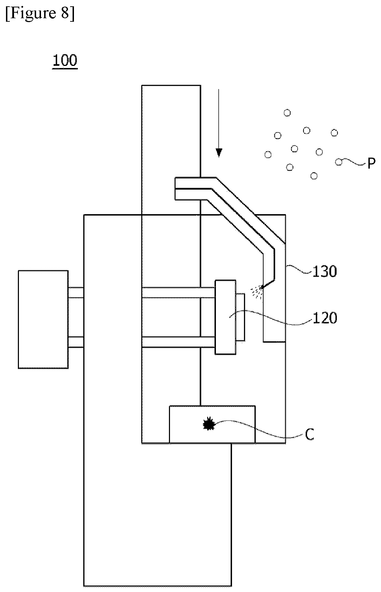

Figure 8 illustrates an appearance in which the crystallized electrolyte (C) is removed from the adsorption pad through air spray. Since the air spray through the nozzle is performed in a diagonal direction from the front upper part, the crystallized electrolyte (C) separated from the adsorption pad moves downward. In other words, the removed electrolyte foreign substances may be moved into the tray (160) and accommodated.

As shown in Figures 5 to 8, it can be known that the electrolyte (P) scattered during the electrolyte injection process, that is, the scattered electrolyte foreign substances, can be effectively prevented from substantially flowing into the pad assembly (120) by the shape and position of the pad cover.

Also, as shown in Figures 7 and 8, when air is sprayed toward the adsorption pad, the adsorption pad is surrounded through the pad cover, the blocking plate, the base, and the tray. Therefore, it can be known that the removed electrolyte foreign substances can be effectively prevented from being transferred or diffused to the surroundings to contaminate the surroundings.

In addition, since the nozzle is mounted and fixed by the pad cover, the spraying position can be easily set and fixed. Therefore, cleaning by spraying can be automatically controlled.

### Industrial Applicability

It is described in the Detailed Description of Invention.

## Claims

1. A pouch-type secondary battery manufacturing device comprising:
a base;
a pad assembly provided at the front of the base and having an adsorption pad adsorbing a pouch in a horizontal direction to form an electrolyte injection path into the inside of the pouch; and
a pad cover covering the upper part and front of the pad assembly and having a nozzle spraying air toward the adsorption pad.

2. The pouch-type secondary battery manufacturing device according to claim 1,
**characterized by** comprising a moving device moving the pad assembly forward and backward with respect to the base.

3. The pouch-type secondary battery manufacturing device according to claim 2,
**characterized in that** the pad assembly is provided so that it moves forward for electrolyte injection and returns backward after the electrolyte injection is completed.

4. The pouch-type secondary battery manufacturing device according to claim 3,
**characterized in that** the nozzle is provided to spray air in a downward diagonal shape from the front upper part of the adsorption pad.

5. The pouch-type secondary battery manufacturing device according to claim 4,
**characterized in that** the base is provided with a tray accommodating electrolyte foreign substances separated from the adsorption pad to fall off by the air spray of the nozzle.

6. The pouch-type secondary battery manufacturing device according to claim 5,
**characterized in that** a blocking plate extending forward to block the electrolyte foreign substances separated from the adsorption pad from spreading to the surroundings is provided on the left and right sides of the base.

7. The pouch-type secondary battery manufacturing device according to claim 6,
**characterized in that** upon the air spray of the nozzle, the spreading of the electrolyte foreign substances in the pad assembly is blocked in the up-and-down, right-and-left, and front-and-back directions through the base, pad cover, tray, and blocking plate.

8. The pouch-type secondary battery manufacturing device according to claim 2,
**characterized in that** the pad cover is provided to be movable between an exposure position exposing a front of the pad assembly and a cover position covering the front of the pad assembly.

9. The pouch-type secondary battery manufacturing device according to claim 8,
**characterized in that** the adsorption of the pouch is performed through the pad assembly at the exposure position of the pad cover, and the air spray is performed through the nozzle at the cover position of the pad cover.

10. The pouch-type secondary battery manufacturing device according to claim 9,
**characterized in that** the pad cover is provided to be movable up and down between the exposure position and the cover position with respect to the base.

11. The pouch-type secondary battery manufacturing device according to claim 10,
**characterized in that** the base is provided with a guide tower guiding elevation of the pad cover.

12. The pouch-type secondary battery manufacturing device according to claim 11,
**characterized in that** the pad cover is provided to slide on the guide tower.

13. The pouch-type secondary battery manufacturing device according to claim 8,
**characterized in that** the pad cover comprises:
an upper cover extending in a diagonal shape from top to bottom to cover an upper part of the pad assembly; and
a front cover extending from the upper cover to the bottom to cover the front of the pad assembly.

14. The pouch-type secondary battery manufacturing device according to claim 13,
**characterized in that** a plurality of the adsorption pads is provided along the width direction of the pad assembly, and the width of the pad cover is larger than the width of the pad assembly.

15. The pouch-type secondary battery manufacturing device according to claim 1,
**characterized by** further comprising an electrolyte injection tube injecting an electrolyte into the pouch, wherein the base, pad assembly, and pad cover are each provided on both sides centered on the electrolyte injection tube.

16. A secondary battery manufacturing method, **characterized by** comprising:
a step of adsorbing a pouch through a pad assembly in an exposure position state of a pad cover and an adsorption position of the pad assembly to inject an electrolyte into the pouch; and
a cleaning step of spraying compressed air into the pad assembly through a nozzle in a cover position state of the pad cover and a return position of the pad assembly to clean the pad assembly, wherein
the cover position of the pad cover is a position where the pad cover interferes with the movement of the pad assembly between the adsorption position and the return position of the pad assembly, and the nozzle is provided on the pad cover.

17. A pouch-type secondary battery manufacturing device, comprising:
a base sunken from the front upper part backward and downward to form a recess having a front surface and a lower surface thereon;
a pad assembly provided at the front of the front surface of the recess and having an adsorption pad adsorbing a pouch in a horizontal direction to form an electrolyte injection path into the inside of the pouch; and
a pad cover covering the upper part and front of the pad assembly located in the recess and having a nozzle spraying air toward the adsorption pad.

18. The secondary battery manufacturing device according to claim 17,
**characterized in that** a blocking plate extending laterally and forward and provided to surround the pad assembly is included on the left and right sides of the recess.

19. The secondary battery manufacturing device according to claim 18,
**characterized in that** a tray accommodating electrolyte foreign substances separated from the adsorption pad is provided on the lower surface of the recess.

20. The pouch-type secondary battery manufacturing device according to claim 19,
**characterized in that** upon air spray of the nozzle, the pad assembly is surrounded in the up-and-down, right-and-left, and front-and-back directions through the front surface of the recess, the pad cover, the tray, and the blocking plate.
